# EUROPÄISCHE PATENTSCHRIFT

(11) **EP 2 313 806 B1**
(45) Veröffentlichungstag und Bekanntmachung des Hinweises auf die Patenterteilung: **15.02.2012**
(21) Anmeldenummer: 09777695.9
(22) Anmeldetag: 06.08.2009
(51) Int. Cl.: G02B 26/02

(54) **FLUIDISCHE ANZEIGE MIT ZENTRALRESERVOIR**
FLUID DISPLAY HAVING A CENTRAL RESERVOIR
AFFICHEURS FLUIDES DOTÉS D UN RÉSERVOIR CENTRAL

(30) Priorität: 20.08.2008 DE 102008038458
(43) Veröffentlichungstag der Anmeldung: 27.04.2011
(73) Patentinhaber: Advanced Display Technology AG, 99050 Appenzell (CH)
(72) Erfinder: BITMAN, Andriy, 44147 Dortmund (DE); RAWERT, Jürgen, 41464 Neuss (DE)
(74) Vertreter: Tönhardt, Marion
(86) Internationale Anmeldenummer: PCT/EP2009/005693
(87) Internationale Veröffentlichungsnummer: WO 2010/020348

(56) Entgegenhaltungen:
- WO-A-03/071335
- WO-A-2007/064142
- US-A- 5 808 593
- US-A1- 2007 040 982

## Beschreibung

### Gebiet der Erfindung

Die Erfindung betrifft das Gebiet der Anzeigegeräte zur Wiedergabe von optischen Informationen. Insbesondere betrifft die Erfindung solche Anzeigen, die auf der Verwendung von Flüssigkeiten zur Visualisierung der Informationen basieren.

### Stand der Technik und Nachteile

Aus dem Stand der Technik ist eine kaum zu überblickende Vielfalt an Anzeigengeräten bekannt, die der Wiedergabe von optischen Informationen wie z.B. Text, stehenden Bildern oder auch bewegten Bildern (Videos) dienen. Während ein großer Teil dieser Anzeigegeräte insbesondere der Wiedergabe farbiger und sich schnell ändernder Informationen dient, existieren auch Lösungen, deren Fokus auf der Wiedergabe eher statischer und ggf. monochromer Informationen liegt.

Beispielhaft für derartige Anzeigegeräte wird die von der Fa. E-Ink (Cambridge, Mass. / USA; www.eink.com) entwickelte Technologie des "elektronischen Papiers" genannt. Hierzu sei beispielsweise auf das Dokument US 6,120,588 ("Electronically addressable microencapsulated ink and display thereof") verwiesen. Hierbei werden eine Vielzahl winziger, in einem elektrischen Feld ausrichtbarer Kügelchen benutzt, die hälftig beispielsweise weiß und schwarz eingefärbt sind. Durch gezieltes Beaufschlagen bestimmter Anzeigeareale mit einem entsprechenden elektrischen Feld erscheinen diese Areale eingefärbt, wohingegen die übrigen Areale nicht gefärbt erscheinen. Zur Verstärkung des Kontrastes kann in den übrigen Arealen auch ein gegenläufiges elektrisches Feld angelegt werden. Besonders vorteilhaft ist die Tatsache, dass derartige Anzeigen mit geringen Leistungen betrieben werden können, allerdings bieten sie auch nur langsame Reaktionszeiten und darüber hinaus den Nachteil, nur wenige Farben darstellen zu können.

Ein anderes Prinzip offenbart beispielsweise das Dokument US 7,304,786 der Firma Liquavista (NL). Das hier beschriebene Verfahren basiert auf der Nutzung farbiger Flüssigkeiten, genauer eines Zwei-Phasen-Gemisches aus einer farbigen Flüssigkeit (Öl) mit einer ungefärbten Trägerflüssigkeit (Wasser). Das Schalten eines einzelnen Bildpunktes ("Pixels") erfolgt mittels des Effektes der Elektrobenetzung. Mittels dieses Effektes kann die Form des den Farbeindruck hervorrufenden Öltropfens verändert werden. Allerdings ist die im jeweiligen Bildpunkt vorhandene Menge an gefärbter Flüssigkeit konstant und lediglich in ihrer räumlichen Form veränderbar. Durch Verwendung des Effektes der Elektrobenetzung kann die Energieaufnahme drastisch gesenkt werden, da die hierzu benötigten Leistungen verhältnismäßig gering sind. In einer Ruheposition ist die farbige Flüssigkeit ohne Leistungszuführung gleichmaßig auf der Flache eines Bildpunktes ausgebreitet, was in einem entsprechend vollflächig gefärbten Bildpunkt resultiert. Aufgrund der verwendeten Flüssigkeiten eignen sich derartige Anzeigen jedoch nur zu einem Betrieb bei normalen Umgebungstemperaturen. Außerdem umfassen die Pixel lediglich eine einzige Farbe, so dass die Anzeige mehrerer unterschiedlicher Farben nur mittels einer engen Anordnung von unterschiedlich gefärbten "Subpixeln" und einer Nutzung des optischen Verschmelzens derselben zu einem Pixel erreicht werden kann. Durch Alterung kann es schließlich nach einiger Zeit zu unerwünschte Degradationen kommen die nicht mehr behebbar sind, da aufgrund des festliegenden Volumens an gefärbter Flüssigkeit eines Bildpunktes kein Austausch der degradierten Flüssigkeit möglich ist.

Häufig umfassen derartige fluidische Anzeigen, die auf der Verwendung gefärbter Flüssigkeiten beruhen, einzelne Anzeigeelemente ("Pixel"), die aus zwei Kammem bestehen, von denen eine der Anzeige dient, während die andere als Reservoir benutzt wird, wenn der entsprechende Pixel gerade nicht angezeigt werden soll. Diese Konstruktionen sind sowohl komplex als auch fehleranfällig. Ein weiterer Nachteil ist darin zu sehen, dass derartige Zwei-Kammer-Lösungen einen entsprechend höheren Flächenverbrauch aufweisen, es sei denn, dass die Kammern jeweils unterhalb der entsprechenden Bildpunkte angeordnet sind, was wiederum zu fluidisch komplexen Konstruktionen führt.

Die US 3,566,172 A offenbart eine Anzeige, bei der mit Hilfe einer Flüssigkeit die anzuzeigende Information dargestellt wird und bei der eine Vielzahl Anzeigeelemente mit einem gemeinsamen Flüssigkeitsreservoir in fluidischer Anbindung steht. Dabei wird die Anzeigeflüssigkeit mit Hilfe zumindest einer Pumpe sowie Ventilen zu dem angesteuerten Anzeigeelement hin- oder von diesem abgeführt.

Die WO 03/071335 A2 offenbart eine Anzeigevorrichtung, bei der mit Hilfe des Elektrobenetzungseffektes die Oberflächengeometrie eines Flüssigkeitstropfens derart manipulierbar ist, dass sich die Brennweite des wie eine Linse wirkenden Flüssigkeitstropfens in Folge der Geometrieveränderung anpassen lässt.

Die US 5,808,593 A offenbart eine fluidische Anzeige mit einer Mehrzahl von Auzeigeelementen zur Anzeige von Information unter Verwendung des Elektrobenetzungseffektes. Sie umfasst mindestens eine Anzeigeflüssigkeit zur Anzeige der Information, eine Kammerschicht, die Hohlräume mit Trennwänden aufweist, eine Elektrodenträgerschicht mit Durchgangsöffnungen und ein Zentral-Flüssigkeitsreservoir zur Bereitstellung der mindestens einen Anzeigeflüssigkeit.

### Aufgabe der Erfindung und Lösung

Die Aufgabe der Erfindung ist es daher, eine Vorrichtung bereitzustellen, welche die Nachteile des Standes der Technik überwindet. Insbesondere ist es wünschenswert, eine Austauschmöglichkeit verbrauchter wie z.B. farblich degradierter Flüssigkeit vorzusehen, um eine dauerhafte Wiedergabe der Originalfarben zu gewährleisten. Darüber hinaus ist es wünschenswert, eine gattungsgemäße Anzeigevorrichtung möglichst Platz sparend und auf eine Weise zu realisieren, dass sie mit geringem Aufwand hergestellt werden kann.

Die Aufgabe wird durch die in Anspruch 1 vorgeschlagene Vorrichtung gelöst. Dementsprechend wird ein Zentral-Flüssigkeitsreservoir bereitgestellt, welches im Zusammenhang mit einer fluidischen Anzeige beliebiger Bauart eingesetzt wird. Das Zentral-Flüssigkeitsreservoir ist dabei mit den fluidischen Anzeigeelementen gekoppelt, welche mit der gefärbten Flüssigkeit auffüllbar sind.

Weitere bevorzugte Ausführungsformen sind den abhängigen Ansprüchen sowie der nachfolgenden detaillierten Beschreibung und der beispielhaften Figur zu entnehmen.

### Beschreibung

Bestimmungsgemäß wird die Erfindung im Zusammenspiel mit einer fluidischen Anzeige beliebiger Bauart unter Verwendung des Elektrobenetzungseffektes eingesetzt. Eine derartige fluidische Anzeige umfasst dabei gewöhnlich mindestens eine Anzeigeflüssigkeit zur Anzeige der Information, wobei die Anzeigeflüssigkeit zumeist gefärbt ist, jedoch auch ungefärbt sein kann, so dass beispielsweise mittels Veränderung des Brechungsindexes oder der Reflexionseigenschaften des von der Anzeigeflüssigkeit benetzten Unter- oder Hintergrundes eine Änderung der optischen Eigenschaften des jeweiligen Bildpunktes erreichbar ist. Ferner umfasst eine derartige fluidische Anzeige eine Mehrzahl von Anzeigeelementen mit Hohlräumen zur Aufnahme der Anzeigeflüssigkeit. Jeder Hohlraum bildet demnach ein abgeschlossenes oder zumindest unterscheidbares Volumen, welches Anzeigeflüssigkeit aufnehmen kann und so das Erscheinungsbild des Bildpunktes bestimmt und beeinflusst.

Erfindungsgemäß ist dabei vorgesehen, dass mindestens ein Zentral-Flüssigkeitsreservoir vorhanden ist, und dass mindestens zwei Hohlräume der Anzeigeelemente mit demselben Zentral-Flüssigkeitsreservoir fluidisch verbunden sind. Fluidisch verbunden bedeutet im Sinne der Erfindung, dass eine Anzeigeflüssigkeit, welche sich im Zentral-Flüssigkeitsreservoir befindet, in alle mit dem Zentral-Flüssigkeitsreservoir verbundenen Hohlräume der Anzeigeelemente strömen kann. Es kann dabei dahingestellt bleiben, ob ggf. weitere, für den Betrieb der fluidischen Anzeige notwendige Elemente wir Ventile, Pumpen oder dergleichen, auf dem fluidischen Pfad zwischen Zentral-Flüssigkeitsreservoir und den Hohlräumen angeordnet sind und diesen bestimmungsgemäß vorübergehend blockieren können. Wesentlich ist hingegen, dass die betreffenden Anzeigeelemente jeweils nicht über ein Flüssigkeitsreservoir verfügen, welches ausschließlich der Versorgung eines einzelnen Anzeigeelementes dient.

Erfindungsgemäß ist die fluidische Anzeige mehrschichtig aufgebaut, umfassend
- eine Kammerschicht, die Hohlräume mit Trennwänden aufweist;
- eine Elektrodenträgerschicht mit streifenförmigen Elektroden und Durchgangsöffnungen; und
- einer Hauptkanalschicht mit Hauptkanälen sowie Querkanälen; wobei
- das Zentral-Flüssigkeitsreservoir eine Anzahl Zentral-Schnittstellen entsprechend der Anzahl Hauptkanäle aufweist;
- die Kammerschicht oberhalb der Elektrodenträgerschicht angeordnet ist und sich die Hauptkanalschicht unterhalb der Elektrodenträgerschicht und das Zentral-Flüssigkeitsreservoir unterhalb der Hauptkanalschicht befindet;
- die Querkanäle so angeordnet sind, dass sie an die Durchgangsöffnungen angrenzen;
- sich an einem Ende der Hauptkanäle eine Schnittstelle zum Zentral-Flüssigkeitsreservoir befindet und die Zentral-Schnittstellen so angeordnet sind, dass sie an die Schnittstellen der Hauptkanäle angrenzen; und
- die Hauptkanäle senkrecht zu der Hauptausdehnungsrichtung der streifenförmigen Elektroden verlaufen und mit genau einem der einem jeden Elektrodenstreifen zugeordneten Hohlräume in fluidischer Anbindung stehen.

Es ist dabei besonders bevorzugt, dass nicht nur einige, sondern alle Hohlräume der Anzeigeelemente mit demselben Zentral-Flüssigkeitsreservoir fluidisch verbunden sind. Mit anderen Worten, die fluidische Anzeige weist nur ein einziges Zentral-Flüssigkeitsreservoir auf, aus welchem alle Anzeigeelemente gespeist werden, bzw. in welches die Anzeigeelemente überschüssige Anzeigeflüssigkeit abgeben.

Insbesondere bei mehrfarbigen fluidischen Anzeigen umfassen diese auch eine entsprechende Anzahl von Anzeigeflüssigkeiten. Daher ist es für diesen Fall bevorzugt vorgesehen, dass für jede Anzeigeflüssigkeit jeweils ein Zentral-Flüssigkeitsreservoir vorgesehen ist. Jedes Zentral-Flüssigkeitsreservoir enthält dabei eine Anzeigeflüssigkeit, und ist mit entsprechenden, für die jeweiligen Farben bestimmten Hohlräumen verbunden, wobei die Anzeigeelemente in diesem Fall beispielsweise mehrschichtig angeordnet sein können oder zu "Subpixeln" zusammenfassbar sind.

Im Rahmen von fluidischen Anzeigen, die erfindungsgemäß auf der Verwendung des Effektes der Elektrobenetzung beruhen oder diesen zumindest mit einbinden, kann das Zentral-Flüssigkeitsreservoir sowohl die Anzeigeflüssigkeit als auch eine ggf. vorhandene Trägerflüssigkeit beinhalten. Hierzu können unterschiedliche Zentral-Flüssigkeitsreservoire vorgesehen sein, es ist aber auch möglich, dass ein einziges Zentral-Flüssigkeitsreservoir für beide Flüssigkeiten ausreicht, sofern sich diese nicht mischen und die Ein- bzw. Auslässe so angeordnet sind, dass sie eine Mischung auch nicht hervorrufen. Beispielsweise kann eine ölhaltige gefärbte Anzeigeflüssigkeit im oberen Bereich eines Zentral-Flüssigkeitsreservoirs auf einer wässrigen Trägerflüssigkeit schwimmen, ohne dass eine Trennwand zwischen den Flüssigkeiten im Zentral-Flüssigkeitsreservoir vorgesehen sein muss.

Es ist ferner bevorzugt, dass eine fluidische Anzeige mit Zentral-Flüssigkeitsreservoir außerdem mindestens eine Einrichtung zum Druckausgleich der Hohlräume der Anzeigeelemente umfasst. Ohne eine solche Einrichtung wird sich bei Entnahme der Anzeigeflüssigkeit aus dem Zentral-Flüssigkeitsreservoir ein Unterdruck in demselben aufbauen, gegen den dann entsprechend hoher Förderdruck aufgebaut werden muss. Analog dazu bildet sich bei Auffüllen des Zentral-Flüssigkeitsreservoirs ein Überdruck auf. Durch einen Druckausgleich, der sowohl durch eine Verbindung mit der Umgebung als auch bevorzugt durch einen geschlossen Kreislauf erreichbar ist, kann dieses Problem vermieden werden.

Grundsätzlich kann das Zentral-Flüssigkeitsreservoir an jeder beliebigen Stelle der fluidischen Anzeige angeordnet sein. Nach einer bevorzugten Ausführungsform ist das Zentral-Flüssigkeitsreservoir jedoch so angeordnet, dass es von den Anzeigeelementen verdeckt wird. Mit anderen Worten, das Zentral-Flüssigkeitsreservoir befindet sich aus der Richtung eines Betrachters jenseits der Anzeigeelemente. Auf diese Weise ist eine besonders Platz sparende Anordnung und zudem ein jeweils kurzer fluidischer Pfad zwischen Zentral-Flüssigkeitsreservoir und den Anzeigeelementen sichergestellt, indem jedes Anzeigeelement einen eigenen Verbindungskanal zum Zentral-Flüssigkeitsreservoir aufweist.

Darüber hinaus umfasst das erfindungsgemäße Zentral-Flüssigkeitsreservoir ferner Zentral-Schnittstellen zum Austausch der Anzeigeflüssigkeit. Auf diese Weise ist es besonders vorteilhaft möglich, die Gesamtheit an Anzeigeflüssigkeit auszutauschen, sei es, weil diese im Laufe der Zeit chemischen Veränderungen unterworfen ist, die zu einer Veränderung des Farbeindrucks führen, oder weil eine anders gefärbte Anzeigeflüssigkeit ausgewählt worden ist. Schließlich kann es auch aus Wartungszwecken sinnvoll sein, die Anzeigeelemente mit einer entsprechenden Reinigungsflüssigkeit zu spülen, und anschließend wieder die ursprüngliche Anzeigeflüssigkeit in das Zentral-Flüssigkeitsreservoir einzufüllen.

Nach einer anderen Ausführungsform ist vorgesehen, dass das Zentral-Flüssigkeitsreservoir von der fluidischen Anzeige abnehmbar ausgestaltet ist. Auf diese Weise ist es besonders leicht möglich, die jeweilige Anzeigeflüssigkeit auszutauschen, da hierzu nur das jeweilige Zentral-Flüssigkeitsreservoir abgenommen und durch ein gewünschtes anderes Zentral-Flüssigkeitsreservoir ersetzt werden muss. Es ist selbstverständlich, dass hierzu fluidische Schnittstellen, die aus dem Stand der Technik bekannt sind, sowie ggf. Verriegelungsmechanismen usw. vorgesehen werden müssen.

Besonders vorteilhaft kann es auch sein, eine Vielzahl von Anzeigeelementen zu einer "Kachel" zusammenzufassen. Dabei umfasst jede Kachel mindestens ein eigenes Zentral-Flüssigkeitsreservoir, oder mehrere Kacheln umfassen zusammen mindestens ein eigenes Zentral-Flüssigkeitsreservoir. Es kann auch vorgesehen sein, dass alle Kacheln mindestens ein eigenes Zentral-Flüssigkeitsreservoir umfassen. Eine derartige Kachel stellt daher eine leicht handhab- und austauschbare Einheit dar, die je nach Größe eines oder mehrere eigene Zentral-Flüssigkeitsreservoire umfassen kann, oder zusammen mit weiteren Kacheln an eines oder mehrere übergeordnete Zentral-Flüssigkeitsreservoire gekoppelt werden kann. Auch Mischformen sind möglich, bei denen z.B. jede Kachel eigene Zentral-Flüssigkeitsreservoire mit gefärbter Anzeigeflüssigkeit umfasst, aber mehrere oder alle Kacheln mit einem Zentral-Flüssigkeitsreservoir für Reinigungsflüssigkeit gekoppelt sind.

Die Erfindung ermöglicht es, auf eine Platz sparende Weise eine Vielzahl von Anzeigeelemente einer fluidischen Anzeige mit Anzeigeflüssigkeit zu versorgen bzw. überschüssige Anzeigeflüssigkeit aufzunehmen. Die fluidischen Pfade sind je nach Ausführungsform sehr kurz. Bei Verwendung einer Einrichtung zum Druckausgleich bleibt der Druck im Zentral-Flüssigkeitsreservoir immer gleich, so dass auch die Förderraten entsprechender Fördereinrichtungen keiner Anpassung bedürfen. Durch die zentrale Versorgung einer Vielzahl von Anzeigeelementen ist es sehr leicht möglich, die entsprechende Anzeigeflüssigkeit dauerhaft auszutauschen oder vorübergehend mit z.B. einer Reinigungsflüssigkeit zu ersetzen.

Es ist klar, dass je nach konkreter Ausgestaltung der Vorrichtung auch Mischformen und nicht explizit beschriebene Abweichungen denkbar sind, ohne vom Grundgedanken der Erfindung abzuweichen.

### Figurenbeschreibung

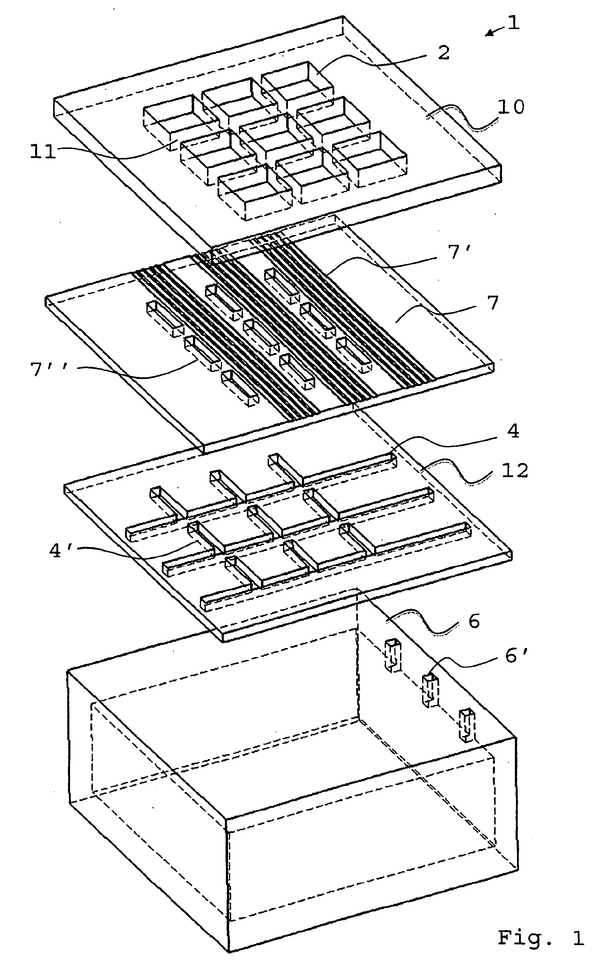

Die **Fig. 1** zeigt beispielhaft eine Anordnung des erfindungsgemäßen Zentral-Flüssigkeitsreservoirs 6 im Zusammenspiel mit einer fluidischen Anzeige 1.

Diese fluidische Anzeige 1 ist in der dargestellten Ausführungsform aus mehreren Schichten zusammengesetzt. In einer Kammerschicht 10 befinden sich Hohlräume 2 mit Trennwänden 11. Die Kammerschicht 10 ist oberhalb einer Elektrodenträgerschicht 7 mit hier streifenförmig dargestellten Elektroden 7' und Durchgangsöffnungen 7" angeordnet. Unterhalb der Elektrodenträgerschicht 7 befindet sich eine Hauptkanalschicht 12. Diese umfasst Hauptkanäle 4 sowie Querkanäle 4', welche so angeordnet sind, dass sie an die Durchgangsöffnungen 7" angrenzen. Am im Bild rechts dargestellten Ende der Hauptkanäle 4 befinden sich die Schnittstellen zum Zentral-Flüssigkeitsreservoir 6, welches sich unterhalb der Hauptkanalschicht 12 befindet. Dieses umfasst seinerseits eine entsprechende Anzahl Zentral-Schnittstellen 6', die so angeordnet sind, dass die an die Schnittstellen der Hauptkanäle 4 angrenzen.

Nicht dargestellt, aber ggf. vorhanden sind entsprechende Fördereinrichtungen, Ventile und dergleichen, sowie elektrische Verbindungen, die zum Betrieb der hier beispielhaft dargestellten, auf dem Effekt der Elektrobenetzung beruhenden fluidischen Anzeige notwendig sind. Ebenfalls nicht dargestellt sind ggf. vorhandene Deck- oder Bodenschichten, eine Einrichtung zum Druckausgleich, sowie weitere, zur Illustration der Erfindung unwesentliche Elemente.

## Patentansprüche

1. Fluidische Anzeige mit einer Mehrzahl von Anzeigeelementen zur Anzeige von Information unter Verwendung des Elektrobenetzungseffektes, umfassend
- mindestens eine Anzeigeflüssigkeit zur Anzeige der Information;
- eine Kammerschicht (10), die Hohlräume (2) mit Trennwänden (11) aufweist;
- eine Elektrodenträgerschicht (7) mit streifenförmigen Elektroden (7') und Durchgangsöffnungen (7");
- eine Hauptkanalschicht (12) mit Hauptkanälen (4) sowie Querkanälen (4'); und
- ein Zentral-Flüssigkeitsreservoir (6) zur Bereitstellung der mindestens einen Anzeigeflüssigkeit, das eine Anzahl Zentral-Schnittstellen (6') entsprechend der Anzahl Hauptkanäle (4) aufweist; wobei
- die Kammerschicht (10) oberhalb der Elektrodenträgerschicht (7) angeordnet ist und sich die Hauptkanalschicht (12) unterhalb der Elektrodenträgerschicht (7) und das Zentral-Flüssigkeitsreservoir (6) unterhalb der Hauptkanalschicht (12) befindet;
- die Querkanäle (4') so angeordnet sind, dass sie an die Durchgangsöffnungen (7") angrenzen;
- sich an einem Ende der Hauptkanäle (4) eine Schnittstelle zum Zentral-Flüssigkeitsreservoir (6) befindet, und die Zentral-Schnittstellen (6') so angeordnet sind, dass sie an die Schnittstellen der Hauptkanäle (4) angrenzen; und
- die Hauptkanäle (4) senkrecht zu der Hauptausdehnungsrichtung der streifenförmigen Elektroden (7') verlaufen und mit genau einem der einem jeden Elektrodenstreifen (7') zugeordneten Hohlräume (2) in fluidischer Anbindung stehen.

2. Fluidische Anzeige (1) nach Anspruch 1, bei welcher für jede Anzeigeflüssigkeit jeweils ein Zentral-Flüssigkeitsreservoir (6) vorgesehen ist.

3. Fluidische Anzeige (1) nach einem der vorangehenden Ansprüche, ferner umfassend mindestens eine Einrichtung zum Druckausgleich der Hohlräume (2) der Anzeigeelemente.

4. Fluidische Anzeige (1) nach einem der vorangehenden Ansprüche, bei welcher das Zentral-Flüssigkeitsreservoir (6) so angeordnet ist, dass es von den Anzeigeelementen der fluidischen Anzeige (1) verdeckt wird.

5. Fluidische Anzeige (1) nach einem der vorangehenden Ansprüche, bei welcher das Zentral-Flüssigkeitsreservoir (6) von der fluidischen Anzeige (1) abnehmbar ausgestaltet ist.

6. Fluidische Anzeige (1) nach einem der vorangehenden Ansprüche, bei welcher eine Vielzahl von Anzeigeelementen zu einer Kachel zusammenfassbar ist, wobei jede Kachel mindestens ein eigenes Zentral-Flüssigkeitsreservoir (6) umfasst, oder wobei mehrere Kacheln zusammen mindestens ein eigenes Zentral-Flüssigkeitsreservoir (6) umfassen, oder wobei alle Kacheln mindestens ein eigenes Zentral-Flüssigkeitsreservoir (6) umfassen.

## Claims

1. A fluidic display device having a plurality of display elements for displaying information by use of the effect of electrowetting, including
- at least one display liquid for displaying information;
- a chamber layer (10) comprising cavities (2) having partitions (11);
- an electrode carrier layer (7) having strip-shaped electrodes (7') and passages (7");
- a main duct layer (12) having main ducts (4) and transverse ducts (4'); and
- a central liquid reservoir (6) for providing said at least one display liquid comprising a number of central interfaces (6') corresponding to the number of main ducts (4); wherein
- said chamber layer (10) is arranged above said electrode carrier layer (7) and said main duct layer (12) is located below said electrode carrier layer (7) and said central liquid reservoir (6) is located below said main duct layer (12);
- said transverse ducts (4') are arranged such that they adjoin said passages (7");
- at one end of said main ducts (4) an interface to said central liquid reservoir (6) is located and said central interfaces (6') are arranged such that they adjoin the interfaces of said main ducts (4); and
- said main ducts (4) extend perpendicularly to the main dimensional direction of said strip-shaped electrodes (7') and are fluidically connected with exactly one of said cavities (2) associated with each of said electrode strips (7').

2. The fluidic display device (1) of claim 1, wherein for each display liquid a central liquid reservoir (6) is respectively provided.

3. The fluidic display device (1) of any of the preceding claims, further including at least one means for pressure equalization of said cavities (2) of said display elements.

4. The fluidic display device (1) of any of the preceding claims, wherein said central liquid reservoir (6) is arranged such that it is covered by said display elements of the fluidic display device (1).

5. The fluidic display device (1) of any of the preceding claims, wherein said central liquid reservoir (6) is configured to be removable from said fluidic display device (1).

6. The fluidic display device (1) of any of the preceding claims, wherein a plurality of display elements can be combined to form a tile, wherein each tile includes at least one own central liquid reservoir (6) and wherein plural tiles together include at least one own central liquid reservoir (6) or wherein all tiles include at least one own central liquid reservoir (6).

## Revendications

1. Afficheur fluidique avec une pluralité d'éléments d'affichage pour afficher une information moyennant l'utilisation de l'effet de mouillage électrique, comprenant :
- au moins un liquide d'affichage pour afficher l'information ;
- un niveau de chambres (10) comportant des cavités (2) avec des cloisons (11) ;
- un niveau de support d'électrodes (7) avec des électrodes (7') en forme de bandes et des orifices de passage (7") ;
- un niveau de conduits principaux (12) avec des conduits principaux (4) et des conduits transversaux (4') ; et
- un réservoir de liquide centralisé (6) pour mettre à disposition ledit au moins un liquide d'affichage, lequel comporte une pluralité d'interfaces centralisées (6') correspondant au nombre de conduits principaux (4) ;
- le niveau des chambres (10) étant agencé au-dessus du niveau de support des électrodes (7) et le niveau de conduits principaux (12) étant situé en dessous du niveau de support des électrodes (7) et le réservoir de liquide centralisé (6) étant situé en dessous du niveau de conduits principaux (12) ;
- les conduits transversaux (4') étant agencés de telle sorte qu'ils sont adjacents aux orifices de passage (7") ;
- une interface vers le réservoir de liquide centralisé (6) étant située à une extrémité des conduits principaux (4), et les interfaces centralisées (6') étant agencées de telle sorte qu'elles sont adjacentes aux interfaces des conduits principaux (4) ; et
- les conduits principaux (4) s'étendant perpendiculairement à la direction de la dimension principale des électrodes (7') en forme de bandes et étant en liaison fluidique avec exactement une des cavités (2) associées à chaque bande d'électrode (7').

2. Afficheur fluidique (1) selon la revendication 1, dans lequel il est prévu un réservoir de liquide centralisé (6) pour chaque liquide d'affichage.

3. Afficheur fluidique (1) selon l'une quelconque des revendications précédentes, comprenant en outre un équipement pour l'équilibrage de la pression dans les cavités (2) des éléments d'affichage.

4. Afficheur fluidique (1) selon l'une quelconque des revendications précédentes, dans lequel le réservoir de liquide centralisé (6) est agencé de telle sorte qu'il est masqué par les éléments d'affichage de l'afficheur fluidique (1).

5. Afficheur fluidique (1) selon l'une quelconque des revendications précédentes, dans lequel le réservoir de liquide centralisé (6) est configuré pour pouvoir être retiré de l'afficheur fluidique (1).

6. Afficheur fluidique (1) selon l'une quelconque des revendications précédentes, dans lequel une pluralité d'éléments d'affichage sont regroupés pour former une page virtuelle, chaque page virtuelle comprenant au moins son propre réservoir de liquide centralisé (6), ou plusieurs pages virtuelles conjointement comprenant au moins leur propre réservoir de liquide centralisé (6) ou toutes les pages virtuelles comprenant au moins un réservoir de liquide centralisé (6) qui leur est propre.
